# EUROPEAN PATENT APPLICATION

(11) **EP 2 675 226 A1**
(43) Date of publication of application: **18.12.2013**
(21) Application number: 12745121.9
(22) Date of filing: 27.01.2012
(51) Int. Cl.: H04W 72/04

(54) **TRANSMISSION DEVICE, RECEPTION DEVICE, TRANSMISSION METHOD, AND RECEPTION METHOD**

(30) Priority: 10.02.2011 JP 2011027434
(71) Applicant: Panasonic Corporation, Osaka 571-8501 (JP)
(72) Inventor: HORIUCHI, Ayako, Chuo-ku Osaka 540-6207 (JP); OIZUMI, Toru, Chuo-ku Osaka 540-6207 (JP); NISHIO, Akihiko, Chuo-ku Osaka 540-6207 (JP)
(74) Representative: Grünecker, Kinkeldey, Stockmair & Schwanhäusser
(86) International application number: PCT/JP2012/000513
(87) International publication number: WO 2012/108138

(57) **Abstract**

A transmission device capable of flexibly setting the transmission mode, even in cases when the candidates for the resource domain to be used to transmit a control signal to a terminal include both a first downlink resource domain that can be used as either a control channel or a data channel and a second downlink resource domain that can be used as a control channel, wherein a transmission mode setting unit (101) sets one transmission mode for each of the first and second downlink resource domains, said transmission mode being selected from among a plurality of transmission modes in which a plurality of control signal formats and the transmission methods that correspond to the control signal formats and are used to transmit data to a terminal (200) have been associated.

## Description

### Technical Field

The present invention relates to a transmitting apparatus, a receiving apparatus, a transmission method scheme, and a reception method.

### Background Art

In recent years, it has become common to transmit large-volume data, such as still image data and moving image data in addition to audio data in cellular mobile communication systems, in response to spread of multimedia information. Active studies associated with techniques for achieving a high transmission rate in a high-frequency radio band has been conducted to achieve large-volume data transmission.

When a high frequency radio band is utilized, however, attenuation increases as the transmission distance increases, although a higher transmission rate can be expected within a short range. Accordingly, the coverage area of a radio communication base station apparatus (hereinafter, abbreviated as "base station") decreases when a mobile communication system using a high frequency radio band is actually put into operation. Thus, more base stations need to be installed in this case. The installation of base stations involves reasonable costs, however. For this reason, there has been a high demand for a technique that provides a communication service using a high-frequency radio band, while limiting an increase in the number of base stations.

In order to meet such a demand, studies have been carried out on a relay technique in which a radio communication relay station apparatus (hereinafter, abbreviated as "relay station") is installed between a base station and a radio communication mobile station apparatus (hereinafter, abbreviated as "mobile station") to perform communication between the base station and mobile station via the relay station for the purpose of increasing the coverage area of each base station. The use of relay technique allows a mobile station not capable of directly communicating with a base station to communicate with the base station via a relay station.

An LTE-A (long-term evolution advanced) system for which the introduction of the relay technique described above has been studied is required to maintain compatibility with LTE (long term evolution) in terms of a smooth transition from and coexistence with LTE. For this reason, mutual compatibility with LTE is required for the relay technique as well.

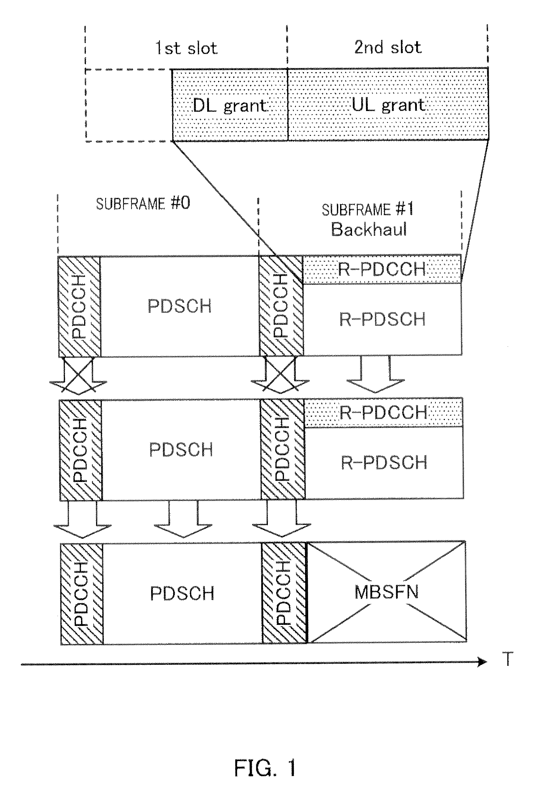

FIG. 1 illustrates example frames in which control signals and data are assigned in the LTE system and the LTE-A system.

In the LTE system, DL (downlink) control signals from a base station to a mobile station are transmitted through a DL control channel, such as PDCCH (physical downlink control channel). In LTE, DL grant indicating DL data assignment and UL (uplink) grant indicating UL data assignment are transmitted through PDCCH. DL grant reports that a resource in the subframe in which the DL grant is transmitted has been allocated to the mobile station. Meanwhile, in an FDD system, UL grant reports that a resource in the fourth subframe after the subframe in which the UL grant is transmitted has been allocated to the mobile station. In a TDD system, UL grant reports that the resource in a subframe transmitted after four or more subframes from the subframe in which the UL grant is transmitted has been allocated to the mobile station. In the TDD system, the subframe to be assigned to the mobile station, or the number of subframes before the assigned subframe in which the UL grant is transmitted is determined in accordance with the time-division pattern of the UL and DL (hereinafter referred to as "UL/DL configuration pattern"). Regardless of the UL/DL configuration pattern, the UL subframe is a subframe after at least four subframes from the subframe in which the UL grant is transmitted.

In the LTE-A system, relay stations, in addition to base stations, also transmit control signals to mobile stations in PDCCH regions in the top parts of subframes. With reference to a relay station, DL control signals have to be transmitted to a mobile station. Thus, the relay station switches the processing to reception processing after transmitting the control signals to the mobile station to prepare for receiving signals transmitted from the base station. The base station, however, transmits DL control signals to the relay station at the time the relay station transmits the DL control signals to the mobile station. The relay station therefore cannot receive the DL control signals transmitted from the base station. In order to avoid such inconvenience in the LTE-A, studies have been carried out on providing a region in which downlink control signals for relay stations are located (i.e., relay PDCCH (R-PDCCH) region) in a data region. Similar to the PDCCH, locating DL grant and UL grant on the R-PDCCH is studied. In the R-PDCCH, as illustrated in FIG. 1, locating the DL grant in the first slot and the UL grant in the second slot is studied (refer to Non-patent Literature 1). Locating the DL grant in the first slot reduces a delay in decoding the DL grant, and allows relay stations to prepare for ACK/NACK transmission for DL data (transmitted in the fourth subframes following reception of DL grant in FDD). Each relay station finds the downlink control signals intended for the relay station by performing blind-decoding on downlink control signals transmitted using an R-PDCCH region from a base station within a resource region indicated using higher layer signaling from the base station (i.e., search space).

Furthermore, in order for an LTE-A system to simultaneously achieve communication at an ultra-high transmission rate several times the transmission rate in the LTE system and backward compatibility with the LTE system, a band for the LTE-A system is divided into "component carriers (hereinafter, abbreviated as "CC") of 20 MHz or less which is a support bandwidth of the LTE system. That is, the "component carrier" here is a band having a width of maximum 20 MHz and defined as a base unit of a communication band. Furthermore, a "component carrier" on a downlink (hereinafter, referred to as "downlink component carrier") may be defined as a band divided by downlink frequency band information in a BCH broadcast from a base station or as a band determined by a distribution width when a downlink control channel (PDCCH) is arranged distributed to frequency domains. Furthermore, a "component carrier" on an uplink (hereinafter, referred to as "uplink component carrier") may be defined as a band divided by uplink frequency band information in a broadcast channel (BCH) broadcast from a base station or a base unit of a communication band of 20 MHz or less including a PUSCH (Physical Uplink Shared CHannel) region in the vicinity of the center and including PUCCHs for LTE at both ends.

The LTE-A system supports communication using a band that bundles some of component carriers thereof, so-called carrier aggregation. Since throughput requirements for an uplink are generally different from throughput requirements for a downlink, for the LTE-A system, studies are also being carried out on carrier aggregation in which the number of component bands set for a terminal corresponding to an arbitrary LTE-A system (hereinafter, referred to as "LTE-A terminal") differs between the uplink and the downlink, or so-called asymmetric carrier aggregation. Furthermore, the LTE-A system also supports a case where the number of component bands is asymmetric between the uplink and the downlink, and frequency bandwidths differ from one component band to another.

Given the introduction of various apparatuses as radio communication terminals in the future M2M (machine to machine) communication, for example, there is a concern for a shortage of resources in the mapping region for PDCCH (i.e., "PDCCH region") due to an increase in the number of terminals. If PDCCH cannot be mapped due to such a resource shortage, the DL data cannot be scheduled for the terminals. Thus, the resource region for mapping DL data (i.e., "PDSCH (physical downlink shared channel) region") cannot be used even if there is an available region, possibly causing a decrease in the system throughput. Studies have been carried out to solve such resource shortage through locating control signals for terminals served by a base station in a data region to which R-PDCCH is mapped (i.e., "R-PDCCH region"). Locating the control signals in a data region in such a manner enables transmission power control for control signals transmitted to terminals near a cell edge or interference control for interference to another cell by control signals to be transmitted or interference to the cell from another cell.

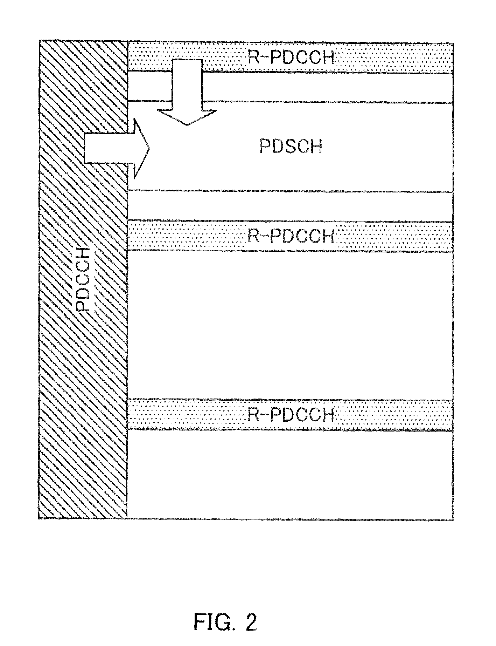

Here, unlike a relay station, a terminal can receive control signals with both PDCCH and R-PDCCH. That is, the terminal basically needs to blind-decode both a search space corresponding to PDCCH and a search space corresponding to R-PDCCH. However, as shown in FIG. 2, in an arbitrary subframe, a control signal transmitted from the base station to the terminal is assumed to be transmitted by either PDCCH or R-PDCCH. Therefore, the terminal attempts to perform blind decoding on both the search space corresponding to PDCCH and the search space corresponding to R-PDCCH, but the control signal may be actually detected in only one of the search space corresponding to PDCCH and the search space corresponding to R-PDCCH. As a method of reducing the burden of blind decoding carried out by the terminal, the base station may transmit a control signal using mainly R-PDCCH and transmit a control signal through PDCCH only in a special case (e.g., a case of a failure in capturing the search space of R-PDCCH due to erroneous detection of signaling in a higher layer or the like, or a case where a control signal is transmitted in a subframe including many available PDCCH regions or the like).

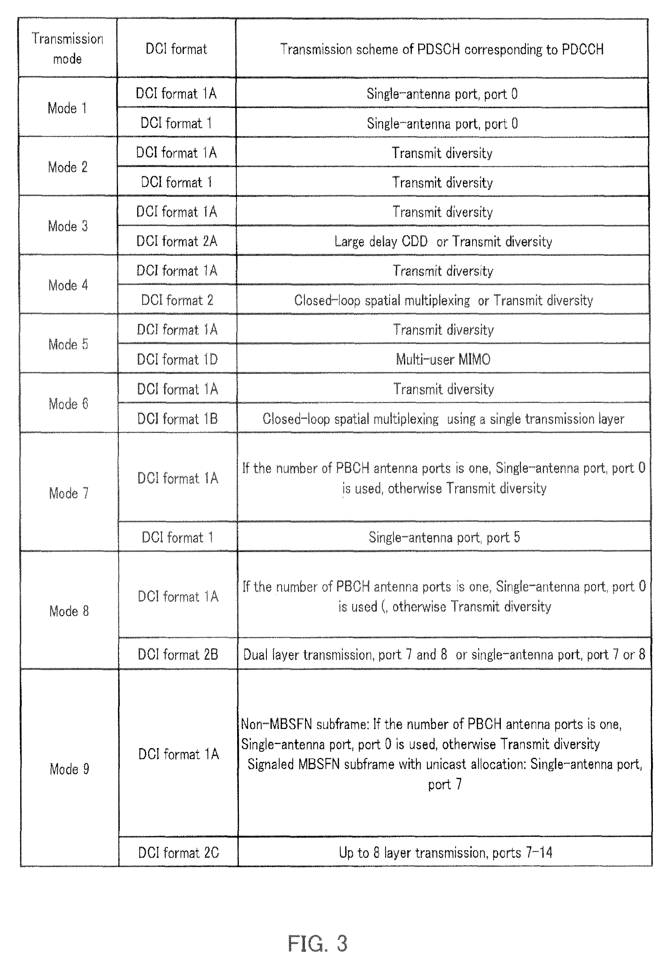

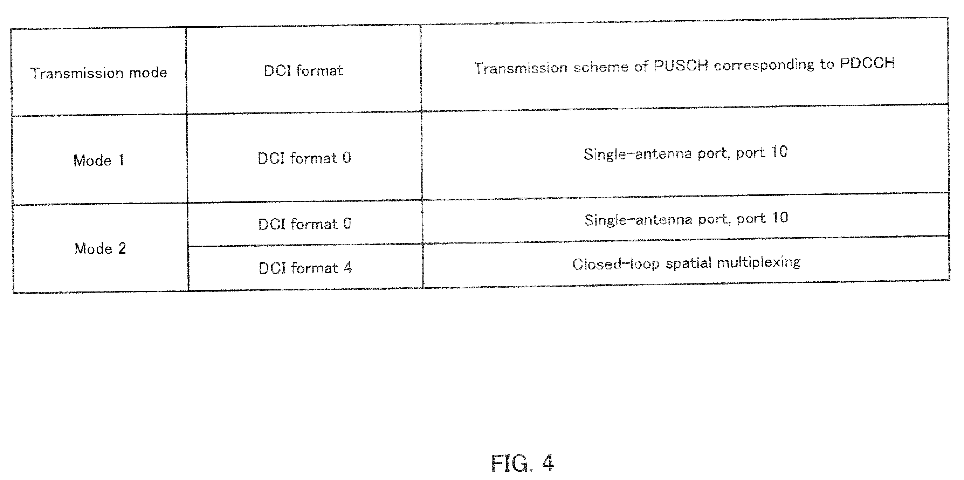

In LTE-A, studies are being conducted on a transmission mode (TM) for DL and a transmission mode for UL (e.g., see Non-Patent Literature 2). A transmission mode determines a DCI format and a transmission scheme to be detected in a PDCCH region. Examples of the transmission scheme supported by the transmission mode include the presence or absence of diversity and RS (reference signal) used for data. Furthermore, the DCI format size varies depending on the number of TBs (transport blocks) that can be transmitted in the transmission mode supported by the DCI format. To be more specific, the size of the DCI format supporting the transmission mode capable of transmitting a plurality of transport blocks (TBs) is greater than the size of the DCI format supporting one TB. The DCI formats supporting the transmission mode capable of transmitting a plurality of TBs are DCI formats 2, 2A, 2B and 2C. FIG. 3 shows an example of a table of correspondence among DL transmission mode, DCI format, and transmission scheme under study in LTE-A. Support of TM9 by DCI format 1 in the table of correspondence is also currently under study. Furthermore, FIG. 4 shows an example of a table of correspondence among UL transmission mode, DCI format, and transmission scheme under study in LTE-A.

### Citation List

### Non-Patent Literature

NPL 1
   3GPP TSG-RAN W G1 Meeting, R1-106478, "Capturing of further agreements on relaying" November 2010
NPL 2
   3GPP TS 36.213 V10.0.0

### Summary of Invention

### Technical Problem

However, there is no proposal of a transmission mode setting method in an R-PDCCH region used for transmission of control signals to a terminal.

It is an object of the present invention to provide a transmitting apparatus, a receiving apparatus, a transmission method, and a reception method capable of flexibly setting a transmission mode even when both a first resource region usable for both a control channel and a data channel, and a second resource region usable for a control channel are included as candidates of resource regions used to transmit a control signal to one receiving apparatus.

### Solution to Problem

A transmitting apparatus according to an aspect of the present invention includes a transmission mode setting section that sets one transmission mode among a plurality of transmission modes in which a plurality of control signal formats are associated with a plurality of transmission schemes used for data signals, for each of a first resource region usable for both a control channel and a data channel, and a second resource region usable for a control channel, and a transmitting section that maps control signals for one receiving apparatus to the first resource region or the second resource region, transmits the mapped signals to the receiving apparatus and transmits information relating to the transmission mode set for each of the first resource region and the second resource region to the receiving apparatus.

A receiving apparatus according to an aspect of the present invention includes a receiving section that receives control signals addressed to the receiving apparatus transmitted from a transmitting apparatus in a first resource region usable for both a control channel and a data channel or in a second resource region usable for a control channel and receives information relating to a transmission mode set by the transmitting apparatus for each of the first resource region and the second resource region, a control signal detection section that searches the control signals in the first resource region and the second resource region and detects a detection region in which the control signals are detected out of the first resource region and the second resource region and a control signal format applied to the detected control signals, and a transmission scheme specification section that specifies a transmission scheme used for data signals transmitted from the transmitting apparatus based on a correspondence rule that associates a plurality of transmission mode candidates with a plurality of control signal formats corresponding to the respective transmission mode candidates and transmission schemes corresponding to the respective control signal formats, a transmission mode set by the transmitting apparatus for each of the first resource region and the second resource region, and the detection region and the control signal format detected by the control signal detection section.

A transmission method according to an aspect of the present invention sets one transmission mode among a plurality of transmission modes in which a plurality of control signal formats are associated with a plurality of transmission schemes used for data signals, for each of a first resource region usable for both a control channel and a data channel, and a second resource region usable for a control channel, maps control signals for one receiving apparatus to the first downlink resource region or the second downlink resource region, transmits the mapped signals to the receiving apparatus and transmits information relating to the transmission mode set for each of the first resource region and the second resource region to the receiving apparatus.

A reception method according to an aspect of the present invention receives control signals addressed to a receiving apparatus transmitted from a transmitting apparatus in a first resource region usable for both a control channel and a data channel or in a second resource region usable for a control channel, receives information relating to a transmission mode set by the transmitting apparatus for each of the first resource region and the second resource region, searches the control signals in the first resource region and the second resource region, detects a detection region in which the control signals are detected out of the first resource region and the second resource region and a control signal format applied to the detected control signals, and specifies a transmission scheme used for data signals transmitted from the transmitting apparatus based on a correspondence rule that associates a plurality of transmission mode candidates with a plurality of control signal formats corresponding to the respective transmission mode candidates and transmission schemes corresponding to the respective control signal formats, a transmission mode set by the transmitting apparatus for each of the first resource region and the second resource region, the detected detection region and the detected control signal format.

### Advantageous Effects of Invention

The present invention can provide a transmitting apparatus, a receiving apparatus, a transmission scheme, and a reception scheme capable of flexibly setting a transmission mode even when both a first resource region usable for both a control channel and a data channel, and a second resource region usable for a control channel are included as candidates of resource regions used to transmit a control signal to one receiving apparatus.

### Brief Description of Drawings

FIG. 1 is a diagram illustrating an example of a frame containing control signals and data assigned thereto;
FIG. 2 is a diagram illustrating data resource allocation by PDCCH and R-PDCCH;
FIG. 3 is a diagram illustrating an example of a table of correspondence among DL transmission mode, DCI format and transmission scheme under study in LTE-A;
FIG. 4 is a diagram illustrating an example of a table of correspondence among UL transmission mode, DCI format and transmission scheme under study in LTE-A;
FIG. 5 is a main configuration diagram of a base station according to Embodiment 1 of the present invention;
FIG. 6 is a main configuration diagram of a terminal according to Embodiment 1 of the present invention;
FIG. 7 is a block diagram illustrating a configuration of the base station according to Embodiment 1 of the present invention;
FIG. 8 is a block diagram illustrating a configuration of the terminal according to Embodiment 1 of the present invention;
FIG. 9 is a diagram illustrating a pair identification information specification table according to Embodiment 3 of the present invention;
FIG. 10 is a block diagram illustrating a configuration of a terminal according to Embodiment 4 of the present invention;
FIG. 11 is a table in which all combinations of component carriers, downlink control channels and the number of codewords are associated with the number of table bits used;
FIG. 12 is a diagram illustrating an example of a bit mapping table when the number of table bits is 3;
FIG. 13 is a diagram illustrating an example of a bit mapping table when the number of table bits is 4;
FIG. 14 is a diagram illustrating correspondence between all combinations of the number of codewords for PDCCH and the number of codewords for R-PDCCH, and the respective numbers of response resource explicit indicators and response resource implicit indicators corresponding to the respective combinations in a primary cell;
FIG. 15 is a diagram illustrating correspondence between all combinations of the number of codewords for PDCCH and the number of codewords for R-PDCCH, and the respective numbers of response resource explicit indicators and response resource implicit indicators corresponding to the respective combinations in a secondary cell when cross carrier scheduling is performed;
FIG. 16 is a diagram illustrating correspondence between all combinations of the number of codewords for PDCCH and the number of codewords for R-PDCCH, and the respective numbers of response resource explicit indicators and response resource implicit indicators corresponding to the respective combinations in a secondary cell when cross carrier scheduling is not performed;
FIG. 17 is a diagram that brings together FIG. 14 and FIG. 15;
FIG. 18 is a diagram that brings together FIG. 14 and FIG. 16; and
FIG. 19 is a block diagram illustrating a configuration of a base station according to Embodiment 4 of the present invention.

### Description of Embodiments

As described above, candidates for resource regions used to transmit control signals to one terminal include a first downlink resource region (that is, PDCCH region) usable for both a control channel and a data channel, and a second downlink resource region (that is, R-PDCCH region) usable for a control channel.

As a method of setting transmission modes for a PDCCH region and an R-PDCCH region which are candidates for resource regions used to transmit control signals to one terminal, the present inventor et al. focused attention on a method of setting the same transmission mode for the PDCCH region and the R-PDCCH region. However, the present inventor et al. discovered that because of a difference in features between the PDCCH region and the R-PDCCH region, this setting method could not simultaneously satisfy demands or the like of the PDCCH region and the R-PDCCH region.

That is, the PDCCH region has the following features.
(A) The PDCCH region is presupposed to be shared among a plurality of terminals.
(B) To suppress interference to another cell, there is a demand for using a small-sized DCI format.
(C) Used only for an error case.

On the other hand, the R-PDCCH region has the following features.
(D) The R-PDCCH region can also be handled such that it is not shared among a plurality of terminals.
(E) In the R-PDCCH region, since interference control is possible on a frequency axis, even a large-sized DCI format is not a big problem. Therefore, improving a throughput by increasing transmission efficiency of DL data (that is, data transmitted using PDSCH) is more important than suppressing an increase in the size of the DCI format.

As described above, the present inventor et al. came up with the present invention by discovering that there are differences in features between the PDCCH region and the R-PDCCH region.

Embodiments of the present invention will be described in detail with reference to the drawings. In the embodiments, the same elements will be assigned the same reference numerals, and any duplicate description of the elements is omitted.

### [Embodiment 1]

### [Overview of Communication System]

A communication system according to Embodiment 1 of the present invention has base station 100 and terminal 200. The communication system is an LTE-A system, for example. Base station 100 is an LTE-A base station, and terminal 200 is an LTE-A terminal, for example.

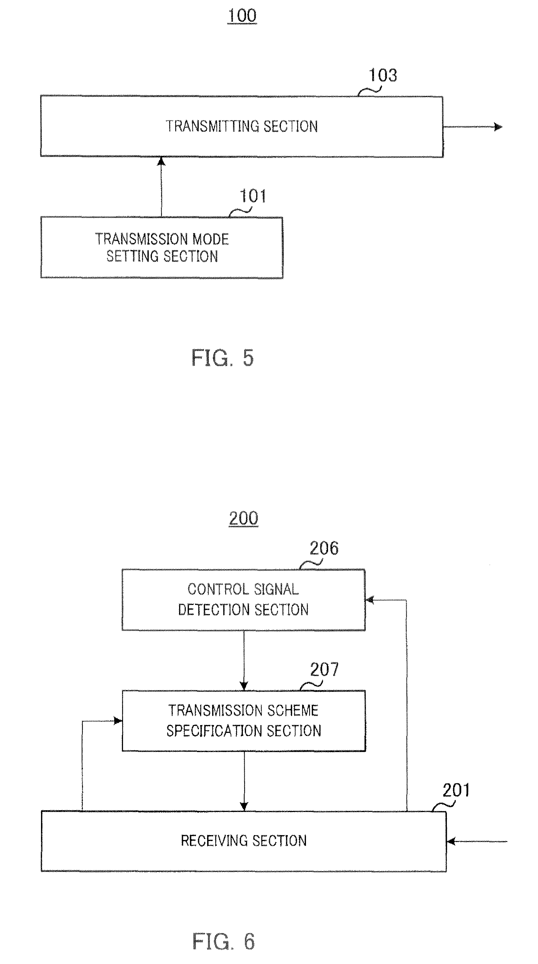

FIG. 5 illustrates a main configuration of base station 100 according to Embodiment 1 of the present invention. Base station 100 transmits control signals for terminal 200 after mapping the control signals to a first resource region usable for both a control channel and a data channel (i.e., R-PDCCH region in an LTE-A system) or in a second resource region usable for a control channel (i.e., PDCCH region in an LTE-A system). Furthermore, the first resource region and the second resource region are arranged in a subframe in the order of the second resource region and the first resource region in the time direction.

In base station 100, transmission mode setting section 101 sets one transmission mode from among a plurality of transmission modes in which a plurality of control signal formats (that is, DCI formats) are associated with transmission schemes used for data transmission to terminal 200, for each of the first resource region and the second resource region. Transmitting section 103 transmits, to terminal 200, information relating to the transmission mode set by transmission mode setting section 101 in each of the first resource region and the second resource region.

FIG. 6 is a main configuration diagram of terminal 200 according to Embodiment 1 of the present invention. Terminal 200 receives control signals addressed to terminal 200 transmitted from base station 100 in the first resource region usable for both a control channel and a data channel (that is, R-PDCCH region in the LTE-A system) or the second resource region usable for a control channel (that is, PDCCH region in the LTE-A system).

In terminal 200, receiving section 201 receives the information relating to the transmission mode set by base station 100 for each of the first resource region and the second resource region and applies, to a data signal transmitted from base station 100, reception processing corresponding to the transmission scheme used to transmit the data signal addressed to terminal 200 from base station 100. Control signal detection section 206 then searches control signals in the first resource region and the second resource region, and detects the detection region in which the control signals are detected among the first resource region and the second resource region and control signal formats applied to the detected control signals. Transmission scheme specification section 207 then specifies a transmission scheme to be used based on a table of correspondence, the transmission mode and the detection region and the control signal format detected by control signal detection section 206. The table of correspondence is a table in which a plurality of transmission mode candidates are associated with a plurality of control signal formats corresponding to the respective transmission mode candidates and transmission schemes corresponding to the respective control signal formats. Furthermore, the transmission mode are modes set by base station 100 for each of the first resource region and the second resource region respectively.

### [Configuration of base station]

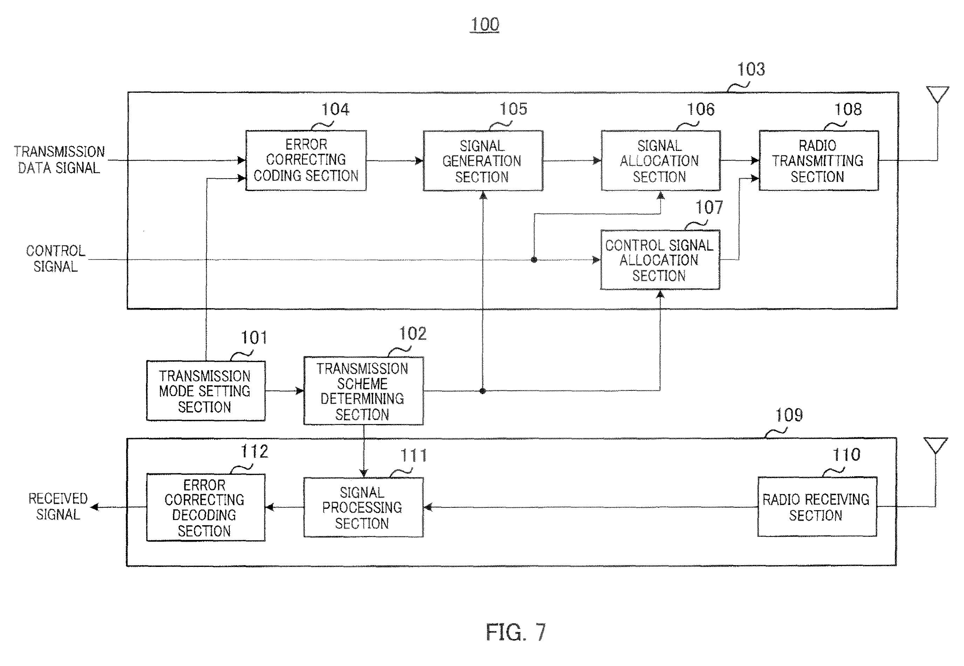

FIG. 7 is a block diagram illustrating a configuration of base station 100 according to Embodiment 1 of the present invention. Base station 100 is an LTE-A base station, for example. As a resource region used to transmit control signals to one terminal, base station 100 can select one of a first downlink resource region usable for both a control channel and a data channel (that is, R-PDCCH region in an LTE-A system) and a second downlink resource region usable for a control channel (that is, PDCCH region in an LTE-A system). Here, base station 100 will be described as an LTE-A base station.

In FIG. 7, base station 100 includes transmission mode setting section 101, transmission scheme determining section 102, transmitting section 103 and receiving section 109. Transmitting section 103 includes error correcting coding section 104, signal generation section 105, signal allocation section 106, control signal allocation section 107 and radio transmitting section 108. Receiving section 109 includes radio receiving section 110, signal processing section 111 and error correcting decoding section 112.

Transmission mode setting section 101 sets a transmission mode for each of PDCCH and R-PDCCH. The transmission modes are set at the start of communication and when the transmission modes need to be changed due to a variation of channel quality or the like. Therefore, the same transmission mode is used until a change is made. Information relating to the set transmission mode (hereinafter, referred to as "transmission mode information") is outputted to transmission scheme determining section 102.

Furthermore, transmission mode setting section 101 here generates a control signal including transmission mode information corresponding to PDCCH and a control signal including transmission mode information corresponding to R-PDCCH, and outputs both control signals to error correcting coding section 104. Thus, the transmission mode information corresponding to PDCCH and the transmission mode information corresponding to R-PDCCH are reported to terminal 200 through different kinds of signaling. Furthermore, the control signal outputted from transmission mode setting section 101 to error correcting coding section 104 is transmitted together with transmission data as a higher layer control signal. That is, the control signal outputted from transmission mode setting section 101 to error correcting coding section 104 is reported to terminal 200 through higher layer RRC (radio resource control) signaling.

Transmission scheme determining section 102 determines a transmission scheme for a downlink data signal (that is, PDSCH transmission scheme) and "control signal resources information" (that is, information indicating resources actually used to transmit control signals in PDCCH and R-PDCCH). The transmission scheme is determined for each subframe.

To be more specific, transmission scheme determining section 102 stores a table of correspondence among a transmission mode, DCI format, and transmission scheme. This table of correspondence has a format as shown in FIG. 2, for example. Transmission scheme determining section 102 may store a table of correspondence for PDCCH and a table of correspondence for R-PDCCH separately or may store a table of correspondence for both PDCCH and R-PDCCH.

Transmission scheme determining section 102 determines a transmission scheme for a downlink data signal and determines resources actually used to transmit control signals out of PDCCH and R-PDCCH based on the transmission scheme, the transmission mode set by transmission mode setting section 101 for each of PDCCH and R-PDCCH and the table of correspondence. Here, the transmission scheme reported according to DCI format 1A is supported by a plurality of transmission modes. Therefore, control signal resources may not be uniquely determined even based on the transmission scheme, the transmission mode set by transmission mode setting section 101 for each of PDCCH and R-PDCCH and the table of correspondence. In this case, transmission scheme determining section 102 determines resources actually used to transmit control signals out of PDCCH and R-PDCCH according to a predetermined rule.

The transmission scheme for downlink data signals determined by transmission scheme determining section 102 and information relating to control signal resources are outputted to signal generation section 105, control signal allocation section 107 and signal processing section 111.

Error correcting coding section 104 receives a transmission signal and a control signal outputted from transmission mode setting section 101 as input, performs error correcting coding on the input signal and outputs the signal to signal generation section 105.

Signal generation section 105 performs signal generation processing corresponding to the transmission scheme determined in transmission scheme determining section 102 on the signal received from error correcting coding section 104.

For example, when the transmission scheme determined in transmission scheme determining section 102 is a transmission scheme using a single antenna port, signal generation section 105 modulates the signal received from error correcting coding section 104 and outputs the modulated signal to signal allocation section 106. On the other hand, when the transmission scheme determined in transmission scheme determining section 102 is a transmission scheme using a plurality of antenna ports, signal generation section 105 modulates the signal received from error correcting coding section 104, thereby generates a modulated signal for each antenna port, assigns a weight to the generated modulated signal for each antenna port, and then outputs the weighted signal to signal allocation section 106. Furthermore, when the transmission scheme determined in transmission scheme determining section 102 is a transmission scheme capable of transmitting a plurality of transport blocks (TBs), signal generation section 105 generates a plurality of TBs from the signal received from error correcting coding section 104, assigns weights which differ from one TB to another to the plurality of TBs and then outputs the weighted TBs to signal allocation section 106.

Signal allocation section 106 maps the modulated signal received from signal generation section 105 to a resource region corresponding to the inputted control signal and outputs the mapped signal to radio transmitting section 108. To be more specific, signal allocation section 106 maps a data signal addressed to the terminal to a resource region indicated by a DL grant included in a downlink control signal addressed to the terminal.

Control signal allocation section 107 maps the inputted control signals to control signal resources determined in transmission scheme determining section 102. Here, the control signal inputted to control signal allocation section 107 includes a DL grant which is a control signal to which a DL resource is allocated and a UL grant which is a control signal to which a UL resource is allocated.

Radio transmitting section 108 applies radio transmission processing such as up-conversion to the input signal and transmits the signal via an antenna.

Radio receiving section 110 receives a signal transmitted from terminal 200 via an antenna, applies radio processing such as down-conversion and then outputs the signal to signal processing section 111.

Signal processing section 111 performs signal transmission processing corresponding to the transmission scheme determined in transmission scheme determining section 102 on the input signal and outputs the signal obtained to error correcting decoding section 112.

Error correcting decoding section 112 decodes the input signal and outputs the received signal obtained.

### [Configuration of terminal]

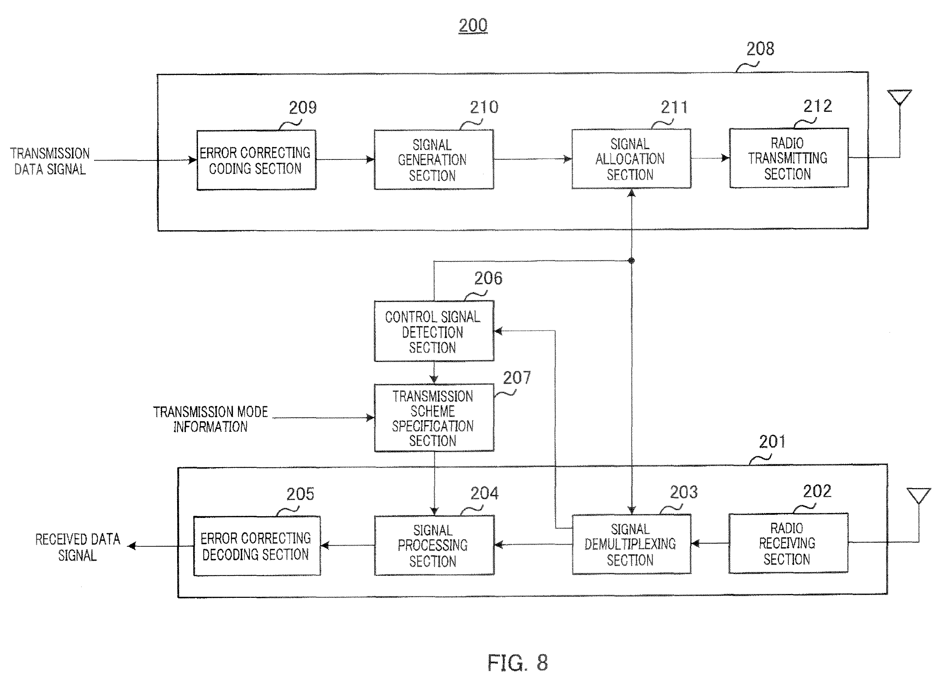

FIG. 8 is a block diagram illustrating a configuration of terminal 200 according to Embodiment 1 of the present invention. Base station 100 is an LTE-A terminal, for example. Here, terminal 200 will be described as an LTE-A terminal.

In FIG. 8, terminal 200 includes receiving section 201, control signal detection section 206, transmission scheme specification section 207 and transmitting section 208. Receiving section 201 includes radio receiving section 202, signal demultiplexing section 203, signal processing section 204, and error correcting decoding section 205. Transmitting section 208 includes error correcting coding section 209, signal generation section 210, signal allocation section 211 and radio transmitting section 212.

Radio receiving section 202 receives a signal transmitted from base station 100 via an antenna, applies radio processing such as down-conversion thereto and then outputs the signal to signal demultiplexing section 203.

Signal demultiplexing section 203 outputs the received signal received from radio receiving section 202 to control signal detection section 206. Furthermore, signal demultiplexing section 203 extracts a signal component corresponding to a resource indicated by a DL grant included in a control signal addressed to terminal 200 detected in control signal detection section 206 (that is, signal component corresponding to the downlink data signal) from the received signal and outputs the extracted signal to signal processing section 204.

Signal processing section 204 performs signal reception processing corresponding to the transmission scheme specified in transmission scheme specification section 207. For example, when the transmission scheme specified in transmission scheme specification section 207 is a transmission scheme using a single antenna port, signal processing section 204 demodulates the received signal received from signal demultiplexing section 203 and outputs the demodulated signal to error correcting decoding section 205. On the other hand, when the transmission scheme specified in transmission scheme specification section 207 is a transmission scheme using a plurality of antenna ports, signal processing section 204 assigns a weight for each antenna port to the received signal for each antenna port received from signal demultiplexing section 203, then demodulates the weighted signal and outputs the demodulated signal obtained to error correcting decoding section 205.

Error correcting decoding section 205 decodes the demodulated signal inputted from signal processing section 204 and outputs the received data signal obtained.

Control signal detection section 206 extracts a signal component corresponding to the PDCCH region and the R-PDCCH region from the received signal received from signal demultiplexing section 203, performs blind decoding on the extracted signal component and thereby detects a control signal addressed to terminal 200.

Control signal detection section 206 outputs information relating to the resource region from which a control signal addressed to terminal 200 is detected (that is, PDCCH or R-PDCCH) and information relating to the mode of a DCI format applied to the control signal to transmission scheme specification section 207.

Furthermore, control signal detection section 206 outputs the detected DL grant to signal demultiplexing section 203 and outputs the detected UL grant to signal allocation section 211.

Based on a transmission mode set in the resource region where a control signal addressed to terminal 200 is detected in control signal detection section 206 (that is, PDCCH or R-PDCCH), the mode of the DCI format applied to the control signal and the table of correspondence, transmission scheme specification section 207 specifies a transmission scheme for a downlink data signal corresponding to the control signal. Here, the table of correspondence stored in transmission scheme specification section 207 is the same as the table of correspondence stored in base station 100.

Error correcting coding section 209 receives a transmission data signal as input and performs error correcting coding on the transmission data and outputs the signal to signal generation section 210.

Signal generation section 210 performs signal generation processing corresponding to the UL transmission scheme specified in transmission scheme specification section 207 on the signal received from error correcting coding section 209.

Signal allocation section 211 maps the signal received from signal generation section 210 according to the UL grant received from control signal detection section 206 and outputs the mapped signal to radio transmitting section 212.

Radio transmitting section 212 applies radio transmission processing such as up-conversion to the input signal and transmits the signal via an antenna.

As described above, according to the present embodiment, in base station 100, transmission mode setting section 101 sets one transmission mode for each of the first downlink resource region and the second downlink resource region from among a plurality of transmission modes which are associated with a plurality of control signal formats (that is, DCI formats) and transmission schemes corresponding to the respective control signal formats and used for data transmission to terminal 200.

Transmission modes can be thereby flexibly set.

In terminal 200, receiving section 201 receives information relating to the transmission mode set by base station 100 for each of the first downlink resource region and the second downlink resource region and applies reception processing corresponding to the transmission scheme used for data transmission from base station 100 to terminal 200 to the data signal transmitted from base station 100. Control signal detection section 206 searches control signals in the first downlink resource region and the second downlink resource region and detects the detection regions in which the control signals are detected out of the first downlink resource region and the second downlink resource region, and control signal formats applied to the detected control signals. Transmission scheme specification section 207 then specifies a transmission scheme to be used based on the table of correspondence, the transmission mode and the detection region and the control signal format detected by control signal detection section 206. The table of correspondence is a table in which a plurality of transmission mode candidates, a plurality of control signal formats corresponding to the respective transmission mode candidates and transmission schemes corresponding to the respective control signal formats are associated with each other. Furthermore, the transmission mode is a mode set by base station 100 for each of the first downlink resource region and the second downlink resource region.

The above description assumes that the information relating to the transmission mode set for each of the first downlink resource region and the second downlink resource region is reported to terminal 200 through higher layer RRC (radio resource control) signaling. However, without being limited to this, the information relating to the transmission mode set for each of the first downlink resource region and the second downlink resource region may also be reported to terminal 200 through PDCCH. Alternatively, one piece of the information relating to the respective transmission modes set for the first downlink resource region and the second downlink resource region may be reported to terminal 200 through higher layer RRC (radio resource control) signaling and the other may be reported to terminal 200 through PDCCH. In this case, transmission mode setting section 101 outputs the information relating to the transmission modes reported to terminal 200 through PDCCH to control signal allocation section 107.

### [Embodiment 2]

As with Embodiment 1, Embodiment 2 sets one transmission mode for each of a first downlink, resource region and a second downlink resource region out of a plurality of transmission modes associated with a plurality of control signal formats (that is, DCI formats) and transmission schemes corresponding to the respective control signal formats and used for data transmission to terminal 200. However, in Embodiment 2, the transmission mode set for the second downlink resource region (that is, PDCCH region in an LTE-A system) is fixed. Since a base station and a terminal according to Embodiment 2 are similar to base station 100 and terminal 200 according to Embodiment 1, these will be described using FIGS. 7 and 8.

In base station 100 of Embodiment 2, transmission mode setting section 101 sets respective transmission modes for PDCCH. and R-PDCCH. However, in Embodiment 2, the transmission mode set for the PDCCH region is fixed.

Here, transmission mode setting section 101 generates a control signal including transmission mode information corresponding to PDCCH and a control signal including transmission mode information corresponding to R-PDCCH, and outputs both control signals to error correcting coding section 104. Thus, the transmission mode information corresponding to PDCCH and the transmission mode information corresponding to R-PDCCH are reported to terminal 200 through different kinds of signaling. Furthermore, the control signals outputted from transmission mode setting section 101 to error correcting coding section 104 are transmitted together with transmission data as higher layer control signals. That is, the control signals outputted from transmission mode setting section 101 to error correcting coding section 104 are reported to terminal 200 through higher layer RRC (radio resource control) signaling.

Transmission scheme determining section 102 determines a transmission scheme for a downlink data signal (that is, PDSCH transmission scheme) and "control signal resources information" (that is, information indicating resources to be actually used for transmission of control signals out of PDCCH and R-PDCCH). Here, of PDCCH and R-PDCCH, transmission scheme determining section 102 mainly uses R-PDCCH as a resource to be actually used for transmission of control signals and uses PDCCH only when an error occurs in R-PDCCH. Since PDCCH is temporarily used in this way, the transmission mode need not be set in accordance with the reception state or traffic state or the like of terminal 200. As a result, the transmission mode set for the PDCCH region can be fixed.

When the transmission mode is fixed, the transmission mode is fixed to a transmission mode associated with a transmission scheme corresponding to the reception scheme that uses a CRS (cell-specific reference signal) for data reception (that is, transmission modes 1 to 6 in the table of correspondence shown in FIG. 3 correspond thereto).

Note that information relating to respective transmission modes set for the first downlink resource region and the second downlink resource region may be reported to terminal 200 through PDCCH as in the case of Embodiment 1. Alternatively, one piece of the information relating to the respective transmission modes set for the first downlink resource region and the second downlink resource region may be reported to terminal 200 through higher layer RRC (radio resource control) signaling, and the other may be reported to terminal 200 through PDCCH.

The above description assumes that transmission mode information corresponding to fixed PDCCH is reported as occasion demands, but without being limited to this, base station 100 and terminal 200 may share the information beforehand so that only transmission mode information corresponding to R-PDCCH may be reported. This enables the amount of signaling to be reduced.

### [Embodiment 3]

As with Embodiment 1, Embodiment 3 sets one transmission mode for each of a first downlink resource region and a second downlink resource region out of a plurality of transmission modes associated with a plurality of control signal formats (that is, DCI formats) and transmission schemes corresponding to the respective control signal formats and used for data transmission to terminal 200. However, Embodiment 3 generates a control signal including identification information corresponding to a pair of transmission mode information corresponding to PDCCH and transmission mode information corresponding to R-PDCCH, and reports the generated control signal through one kind of signaling. Since a base station and a terminal according to Embodiment 3 are similar to base station 100 and terminal 200 according to Embodiment 1, these will be described using FIGS. 7 and 8.

In base station 100 of Embodiment 3, transmission mode setting section 101 sets respective transmission modes for PDCCH and R-PDCCH.

Furthermore, transmission mode setting section 101 generates control signals including identification information corresponding to a pair of transmission mode information corresponding to PDCCH and transmission mode information corresponding to R-PDCCH and outputs the control signals to error correcting coding section 104. In this way, the transmission mode information corresponding to PDCCH and the transmission mode information corresponding to R-PDCCH are reported to terminal 200 through one kind of signaling. Furthermore, the control signal outputted from transmission mode setting section 101 to error correcting coding section 104 is transmitted together with transmission data as a higher layer control signal.

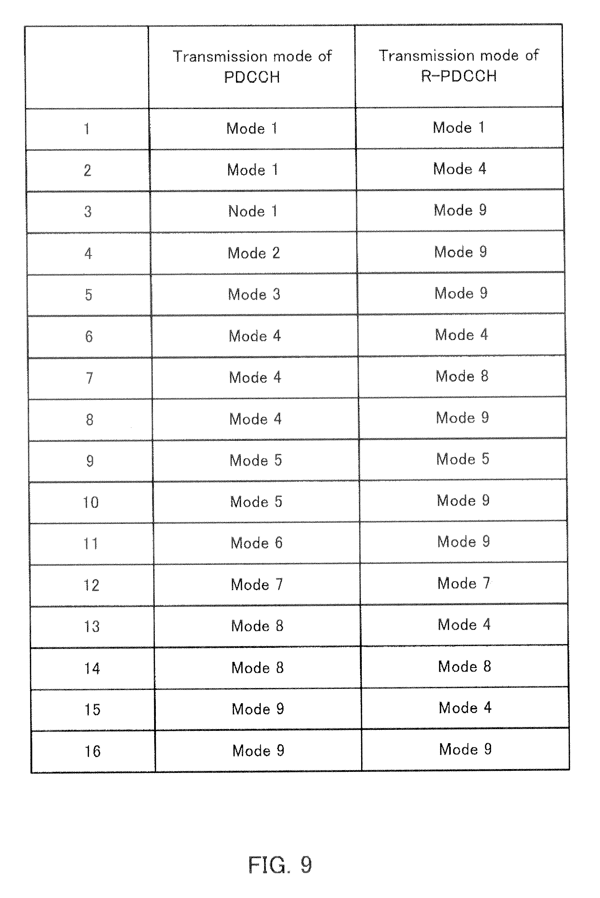

Here, identification information corresponding to the pair of transmission mode information corresponding to PDCCH and the transmission mode information corresponding to R-PDCCH is specified based on a pair identification information specification table shown in FIG. 9, for example.

Reporting the identification information corresponding to the pair of the transmission mode information corresponding to PDCCH and the transmission mode information corresponding to R-PDCCH in this way can reduce the amount of signaling.

As with Embodiment 1, the identification information corresponding to the pair of the transmission mode information corresponding to PDCCH and the transmission mode information corresponding to R-PDCCH may be reported to terminal 200 through PDCCH.

### [Embodiment 4]

Embodiment 4 is an embodiment in the case where carrier aggregation is applied to communication between a base station and a terminal. That is, a plurality of CCs are used for communication between the base station and the terminal. A case will be described below where the number of CCs used is two particularly for simplicity of description.

### [Configuration of terminal]

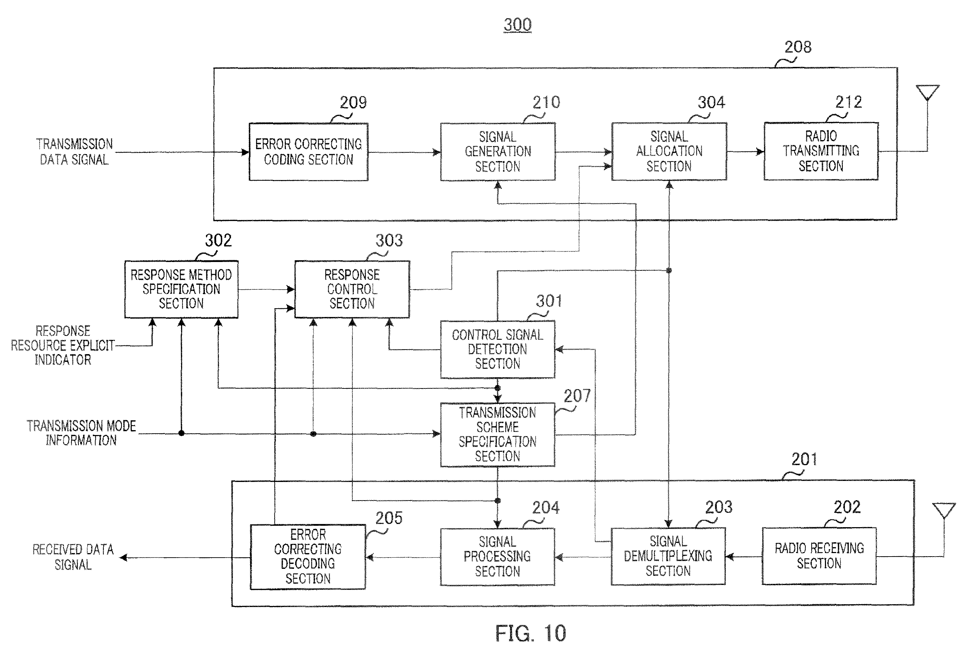

FIG. 10 is a block diagram illustrating a configuration of terminal 300 according to Embodiment 4 of the present invention. In FIG. 10, terminal 300 includes control signal detection section 301, response method specification section 302, response control section 303, and signal allocation section 304.

Control signal detection section 301 has basically the same function as control signal detection section 206. Base station 400 which will be described later performs processing such as setting of transmission modes, determination of transmission schemes and determination of control signal resources or the like for each of two CCs used. Therefore, control signal detection section 301 performs processing in CC units. Other functional sections in terminal 300 also basically perform processing in CC units.

When no control signal addressed to terminal 300 is further detected in the PDCCH region and the R-PDCCH region, control signal detection section 301 outputs DTX (DTX (discontinuous transmission) of ACK/NACK signals) to response control section 303.

Error correcting decoding section 205 decodes received data which is the demodulated signal inputted from signal processing section 204, performs error detection and outputs the error detection result of the received data to response control section 303 for each CC.

Response method specification section 302 receives transmission mode information, a response resource explicit indicator from base station 400 which will be described later and a response resource implicit indicator from base station 400 as input. Response method specification section 302 then specifies a transmission scheme for a response signal (that is, ACK/NACK signal) based on the transmission mode information, a table of correspondence, the response resource explicit indicator from base station 400 and the response resource implicit indicator from base station 400. Specification of the transmission scheme for a response signal (that is, ACK/NACK signal) includes specification of the number of bits corresponding to a bit mapping table used to specify a response method (hereinafter, may also be referred to as the "number of table bits used") and specification of a response resource candidate. Furthermore, the transmission mode information includes information relating to respective transmission modes set for PDCCH and R-PDCCH in first CC (CC1) and information relating to respective transmission modes set for PDCCH and R-PDCCH in second CC (CC2). Furthermore, this table of correspondence is the same as that used in transmission scheme specification section 207.

To be more specific, response method specification section 302 specifies the number of codewords (the number of CWs) corresponding to each combination of CC and PDCCH and each combination of CC and R-PDCCH based on the transmission mode information and the table of correspondence. That is, transmission schemes corresponding to each combination of CC (1, 2) and PDCCH and each combination of CC (1, 2) and R-PDCCH are specified based on the transmission mode information and the table of correspondence, and the number of codewords corresponding to this transmission scheme is specified.

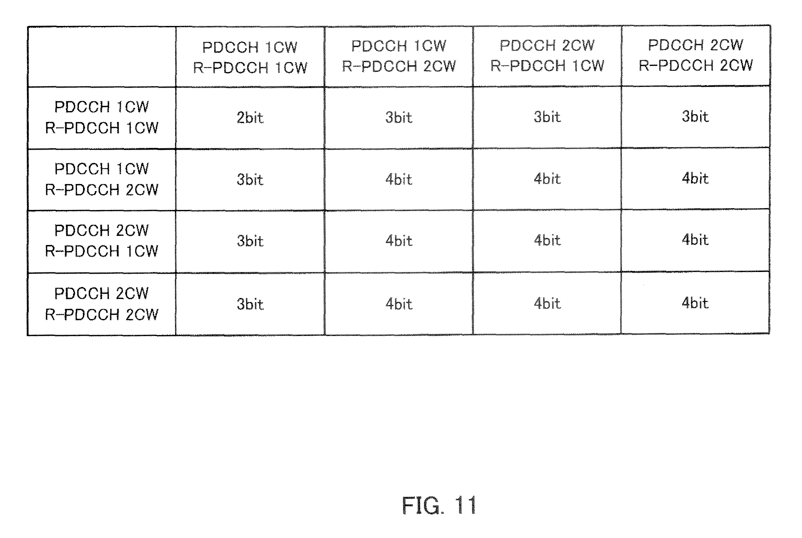

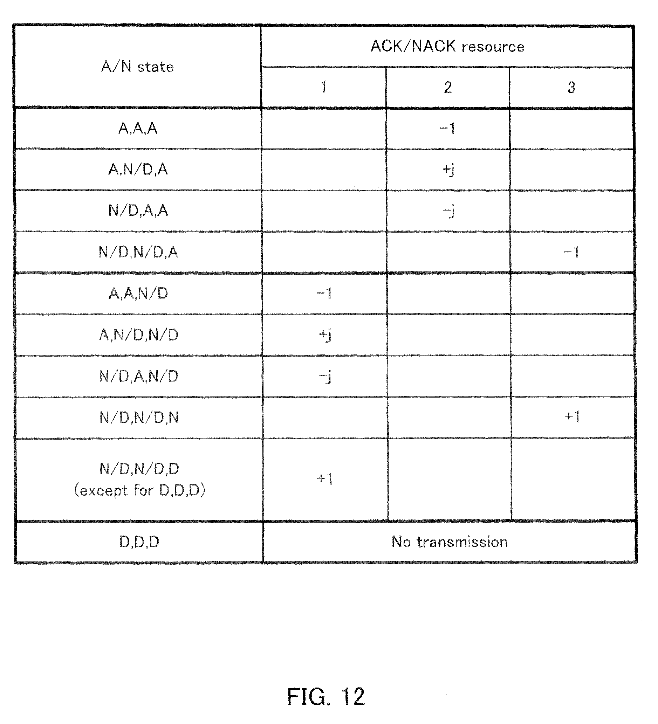

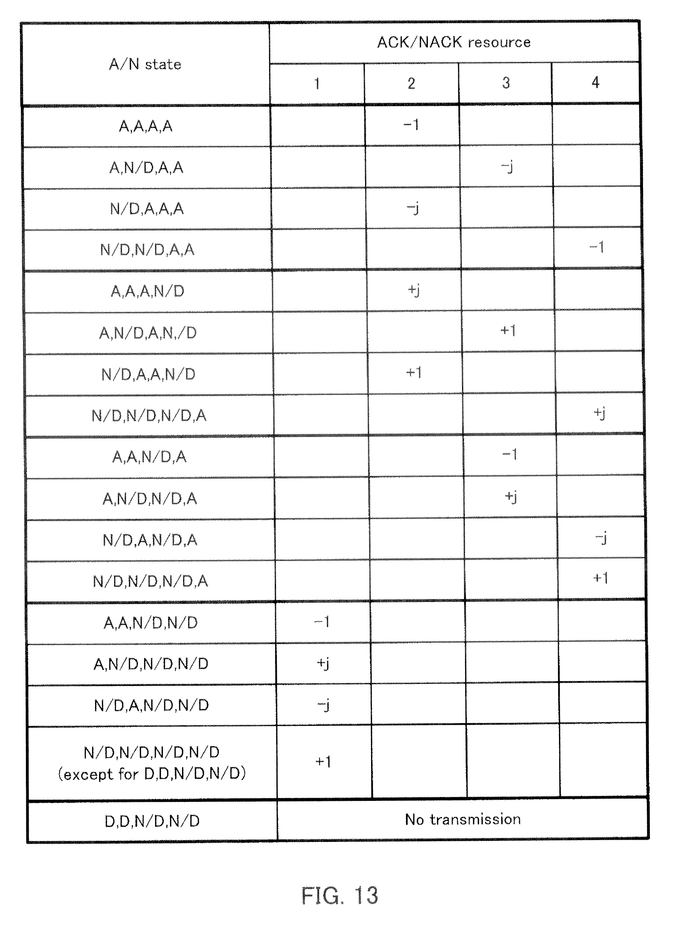

Response method specification section 302 specifies the "number of table bits used" based on a maximum value of the number of codewords in CC1 and a maximum value of the number of codewords in CC2. To be more specific, the number of table bits used is calculated by multiplying the maximum value of the number of codewords in CC1 by the maximum value of the number of codewords in CC2. FIG. 11 shows a table that lists the numbers of table bits used for all combinations: a combination of CC, PDCCH and the number of codewords and a combination of CC, R-PDCCH and the number of codewords. Furthermore, FIG. 12 illustrates an example of the bit mapping table when the number of table bits is 3, and FIG. 13 illustrates an example of the bit mapping table when the number of table bits is 4.

Here, when carrier aggregation is applied, a response signal corresponding to downlink data transmitted with a plurality of CCs associated with carrier aggregation is transmitted with one of the plurality of CCs. That is, the number of "CCs using response transmission" is 1. This CC using response transmission is also called "primary cell (primary serving cell)." A cell other than the CC using response transmission is also called "secondary cell (secondary serving cell)."

There are two types of scheduling when carrier aggregation is applied: first scheduling whereby a control signal for a data resource allocation target CC is transmitted with the data resource allocation target CC and second scheduling (may also be referred to as "cross carrier scheduling") whereby a control signal for a data resource allocation target CC is transmitted with a CC other than the data resource allocation target CC.

Furthermore, when carrier aggregation is applied, there are three methods for transmitting control signals in respective PDCCH regions provided for a plurality of CCs.

A first method is a method whereby a data allocation control signal of a primary cell is transmitted through PDCCH in the primary cell. A plurality of partial regions (CCEs (control channel elements)) included in a PDCCH region in the primary cell and a plurality of partial regions included in a PUCCH region to which a response signal corresponding to downlink data allocated by PDCCH in the primary cell is mapped are beforehand associated with each other in a one-to-one correspondence. Hereinafter, this association will be called "implicit association." Therefore, when the first method is adopted, if a partial region to which a control signal is actually mapped is specified in the PDCCH region in a data resource allocation target CC, a partial region to which a response signal should be mapped is specified in the PUCCH region. An indicator relating to a response signal resource performed by the partial region to which a control signal is actually mapped from base station 400 to terminal 300 is a response resource implicit indicator. Allocation by a response resource implicit indicator is called "implicit allocation."

A second method is a method whereby a data allocation control signal in the secondary cell is transmitted through PDCCH in the primary cell. When the second method is adopted, if a partial region to which a control signal is actually mapped is specified in the PDCCH region in a data resource allocation target CC, a partial region to which a response signal should be mapped is specified in the PUCCH region.

A third method is a method whereby a data allocation control signal in the secondary cell is transmitted through PDCCH in the secondary cell thereof. The above implicit association is not applied to PDCCH in the secondary cell. Therefore, when the third method is applied, base station 400 needs to explicitly indicate PUCCH resources for terminal 300. This response resource explicit indicator is performed through higher layer signaling. Allocation by the response resource explicit indicator is called "explicit allocation." Furthermore, a response resource explicit indicator is called "ARI (A/N resource indicator)" in LTE-A. In LTE-A, four response resource candidates are prepared for PDCCH in the secondary cell, and one of the four response resource candidates is indicated by ARI (A/N resource indicator).

Furthermore, when a control signal is transmitted through R-PDCCH, explicit allocation is performed irrespective of whether the R-PDCCH is located within a CC using response transmission or within a CC other than the CC using response transmission.

Response method specification section 302 specifies a response resource candidate based on a response resource explicit indicator from base station 400 which will be described later and a response resource implicit indicator from base station 400.

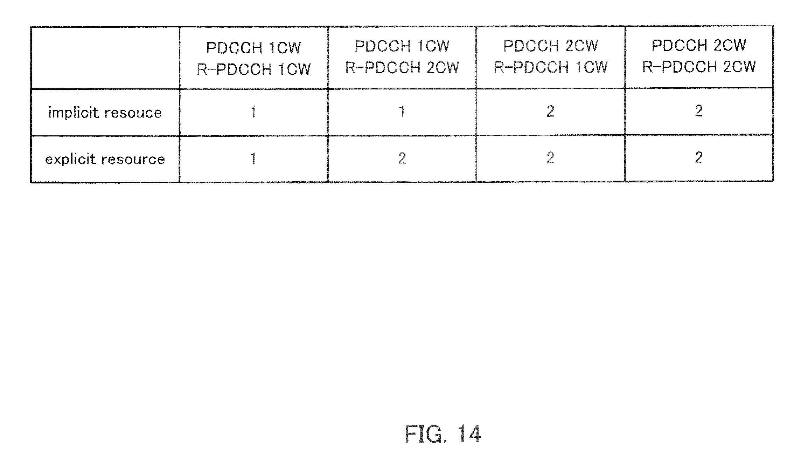

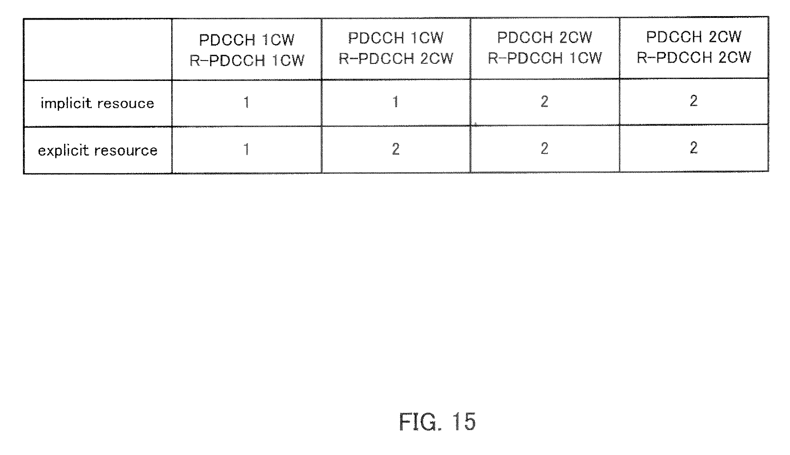

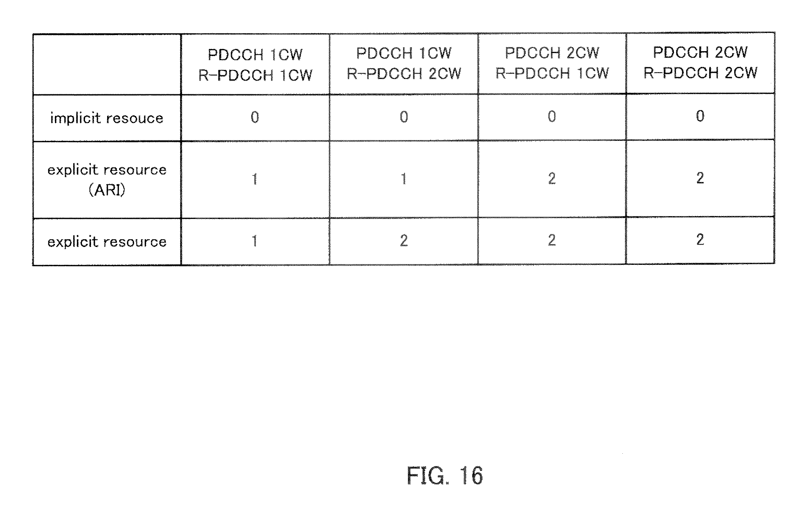

Here, FIG. 14 is a diagram illustrating the correspondence between all combinations of the number of codewords corresponding to PDCCH and the number of codewords corresponding to R-PDCCH in the primary cell, and the numbers of response resource explicit indicators and response resource implicit indicators corresponding to the respective combinations. Furthermore, FIG. 15 is a diagram illustrating the correspondence between all combinations of the number of codewords corresponding to PDCCH and the number of codewords corresponding to R-PDCCH in the secondary cell when cross carrier scheduling is performed, and the numbers of response resource explicit indicators and response resource implicit indicators corresponding to the respective combinations. FIG. 16 is a diagram illustrating the correspondence between all combinations of the number of codewords corresponding to PDCCH and the number of codewords corresponding to R-PDCCH in the secondary cell when cross carrier scheduling is not performed, and the numbers of response resource explicit indicators and response resource implicit indicators corresponding to the respective combinations.

In FIGS. 14 to 16, a characteristic point is the number of response resource explicit indicators associated with a combination in which the number of codewords corresponding to PDCCH is 2 and the number of codewords corresponding to R-PDCCH is 1. In this combination, since the number of codewords corresponding to R-PDCCH is 1, the number of response resource explicit indicators should originally be 1. However, in the present embodiment, since the number of table bits used is determined based on a maximum value of the number of codewords in each CC as described above, resources corresponding in number to the maximum value of the number of codewords in each CC need to be secured (newly provided or other resources need to be used). Thus, the number of response resource explicit indicators is set to 2 here in accordance with the maximum value of the number of codewords in each CC (that is, 2 which is the number of codewords corresponding to PDCCH). In this way, even when there are not sufficient PUCCH resources corresponding to PDCCH, response resource candidates corresponding to 2 codewords can be secured.

In contrast, the number of response resource implicit indicators associated with the combination in which the number of codewords corresponding to PDCCH is 1 and the number of codewords corresponding to R-PDCCH is 2 matches 1 which is the number of codewords corresponding to PDCCH. For example, in the case of this combination and also when a control signal is transmitted from base station 400 to terminal 300 through PDCCH in the primary cell, a resource corresponding to one of the two response resource explicit indicators reported for R-PDCCH in the primary cell is specified as a response resource candidate. In this way, even when there are not sufficient PUCCH resources corresponding to R-PDCCH, response resource candidates corresponding to two codewords can be secured.

To be more specific, response resource candidates are specified as follows. A case will be described in particular below where the number of codewords corresponding to PDCCH is different from the number of codewords corresponding to R-PDCCH.

<When the number of codewords corresponding to PDCCH in primary cell is 2 and the number of codewords corresponding to R-PDCCH is 1>
<1> When a data allocation control signal in the primary cell is transmitted through R-PDCCH in the primary cell, resources corresponding to the two response resource explicit indicators reported for R-PDCCH in the primary cell are specified as response resource candidates.
<2> When a data allocation control signal in the primary cell is transmitted through PDCCH in the primary cell, resources corresponding to the two response resource implicit indicators reported for PDCCH in the primary cell are specified as response resource candidates.

<When the number of code words corresponding to PDCCH in secondary cell is 2 and the number of codewords corresponding to R-PDCCH is 1>
<1> When a data allocation control signal in the secondary cell is transmitted through R-PDCCH in the secondary cell, resources corresponding to the two response resource explicit indicators reported for R-PDCCH in the secondary cell are specified.
<2> When a data allocation control signal in the secondary cell is transmitted through PDCCH in the primary cell, resources corresponding to the two response resource implicit indicators reported for PDCCH in the primary cell are specified as response resource candidates.
<3> When a data allocation control signal in the secondary cell is transmitted through PDCCH in the secondary cell, resources corresponding to the two response resource implicit indicators reported for PDCCH in the secondary cell are specified.

<When the number of codewords corresponding to PDCCH in primary cell is 1 and the number of codewords corresponding to R-PDCCH is 2 >
<1> When a data allocation control signal in the primary cell is transmitted through R-PDCCH in the primary cell, resources corresponding to the two response resource explicit indicators reported for R-PDCCH in the primary cell are specified as response resource candidates.
<2> When a data allocation control signal in the primary cell is transmitted through PDCCH in the primary cell, a resource corresponding to the one response resource implicit indicator reported for PDCCH in the primary cell and a resource corresponding to the one response resource explicit indicator reported for R-PDCCH in the primary cell are specified as response resource candidates.

<When the number of codewords corresponding to PDCCH in secondary cell is 1 and the number of codewords corresponding to R-PDCCH is 2>
<1> When a data allocation control signal in the secondary cell is transmitted through R-PDCCH in the secondary cell, resources corresponding to two response resource explicit indicators reported for R-PDCCH in the secondary cell are specified.
<2> When a data allocation control signal in the secondary cell is transmitted through PDCCH in the primary cell, a resource corresponding to one response resource implicit indicator reported for PDCCH in the primary cell and a resource corresponding to one response resource explicit indicator reported for R-PDCCH in the secondary cell are specified as response resource candidates.
<3> When a data allocation control signal in the secondary cell is transmitted through PDCCH in the secondary cell, resources corresponding to two response resource explicit indicators reported for PDCCH in the secondary cell are specified.

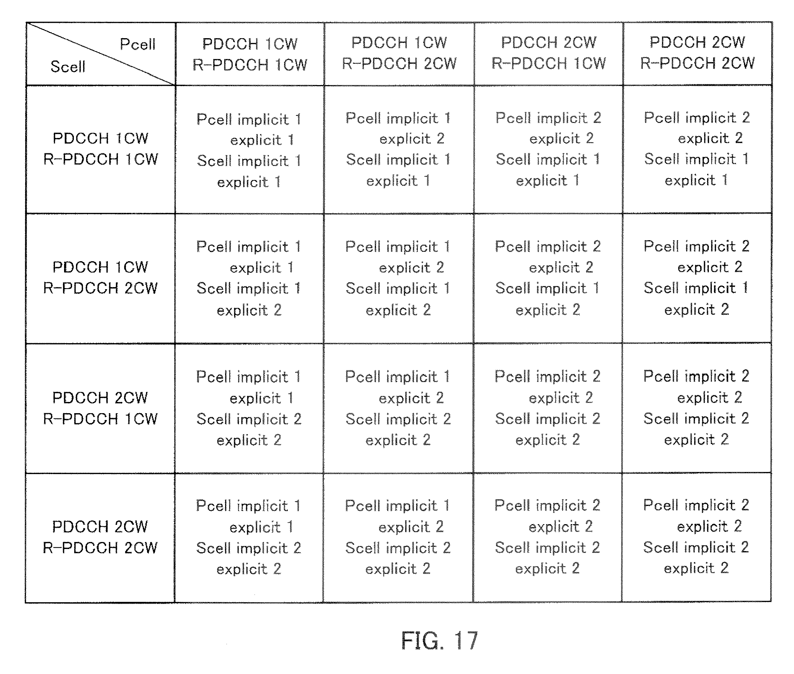

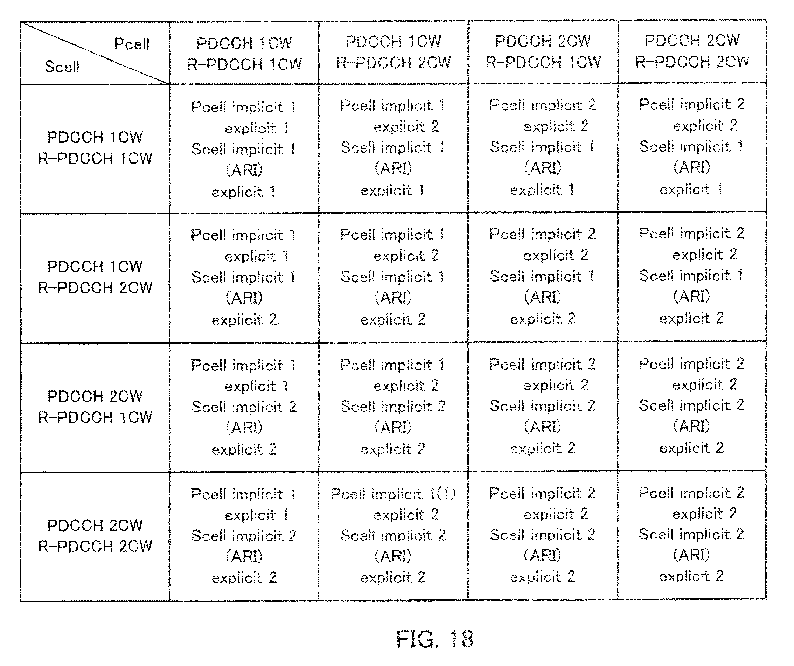

FIG. 17 shows a diagram that brings together FIG. 14 and FIG. 15 and FIG. 18 shows a diagram that brings together FIG. 14 and FIG. 16.

Response control section 303 has a plurality of bit mapping tables. The plurality of bit mapping table bits correspond to the different numbers of table bits.

Response control section 303 generates a response signal (that is, ACK/NACK signal) and response resource indicator information based on a control signal detection result (that is, DTX) for each CC received from control signal detection section 301, an error detection result for each CC received from error correcting decoding section 205, a transmission scheme specified by transmission scheme specification section 207, the number of table bits used and response resource candidate group specified by response method specification section 302, and outputs the response signal and the response resource indicator information to signal allocation section 304.

To be more specific, response control section 303 specifies a detection result pattern based on the control signal detection result (that is, DTX) for each CC received from control signal detection section 301, the error detection result for each CC received from error correcting decoding section 205, and the transmission scheme specified by transmission scheme specification section 207. That is, this detection result pattern corresponds to an A/N state in FIG. 12 and FIG. 13. Here, the total number of codewords transmitted in the primary cell and the secondary cell as a whole (that is, the total number of codewords corresponding to the transmission scheme specified by transmission scheme specification section 207) may not match the number of bit tables used. In this case, response control section 303 specifies the detection result pattern assuming the error detection result of downlink data actually not transmitted as NACK.

That is, the bit mapping table in FIG. 12 is assumed to correspond to a case where the number of codewords supported in the primary cell is 1 and the number of codewords supported in the secondary cell is 2. In this case, regarding the detection result pattern candidate (e.g., [A, A, A]) described in the field of A/N state of the bit mapping table in FIG. 12, the first component corresponds to the detection result of the first codeword in the secondary cell, the second component corresponds to the detection result of the second codeword in the secondary cell and the third component corresponds to the detection result of one codeword in the primary cell. This bit mapping table is originally used, but if the bit mapping table in FIG. 13 is used as the table used, the second codeword in the primary cell is not transmitted, and the component corresponding to this is therefore assumed as NACK or DTX. In the detection result pattern candidate (e.g., [A, A, A, A]) described in the field of A/N state of the bit mapping table in FIG. 13, the first component corresponds to the detection result of the first codeword in the primary cell. Furthermore, the second component corresponds to the detection result of the second codeword in the primary cell. Furthermore, the third component corresponds to the detection result of the first codeword in the secondary cell. Furthermore, the fourth component corresponds to the detection result of the second codeword in the secondary cell. Note that in each cell, the first codeword is a codeword used when the number of codewords supported in the cell is 1, and the second codeword is a codeword used for the first time when the number of codewords supported in the cell is 2. Furthermore, in the bit mapping table, A represents ACK, N represents NACK and D represents DTX.

Response control section 303 then generates a response signal (that is, ACK/NACK signal) and response resource indicator information based on the specified detection result pattern and the bit mapping table corresponding to the number of table bits used specified by response method specification section 302. For example, when the specified detection result pattern is [A, A, A, A], a response signal having a phase corresponding to -1 is generated according to the bit mapping table in FIG. 13. Furthermore, information indicating a response resource whose identification number is 2 (that is, ACK/NACK resource) is generated. This information is response resource indicator information.

Signal allocation section 304 maps the response signal generated in response control section 303 to a resource indicated by the response resource indicator information.

### [Configuration of base station]

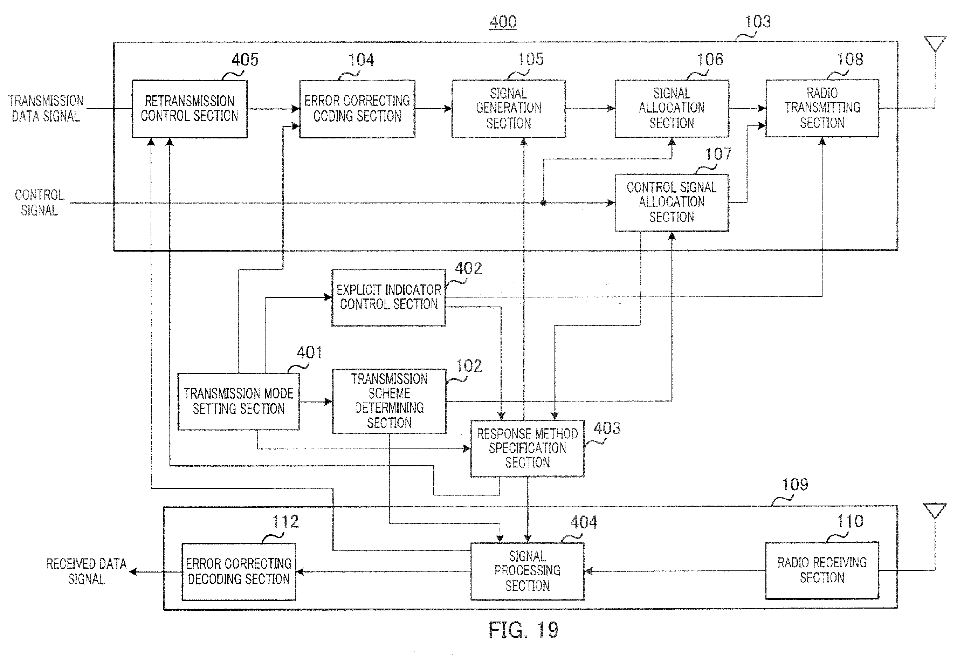

FIG. 19 is a block diagram illustrating a configuration of base station 400 according to Embodiment 4 of the present invention. In FIG. 19, base station 400 includes transmission mode setting section 401, explicit indicator control section 402, response method specification section 403, signal processing section 404 and retransmission control section 405.

Transmission mode setting section 401 basically has the same function as that of transmission mode setting section 101. However, transmission mode setting section 401 sets transmission modes in CC units. Other functional sections in base station 400 basically perform processing in CC units.

Based on the scheduling type (that is, cross carrier scheduling or scheduling other than cross carrier scheduling) and a combination of the number of codewords corresponding to PDCCH and the number of codewords corresponding to R-PDCCH in an arbitrary CC, explicit indicator control section 402 generates a response resource explicit indicator in the arbitrary CC and transmits the response resource explicit indicator to terminal 300 via radio transmitting section 108.

To be more specific, in the case of a combination in which the number of codewords corresponding to PDCCH is 2 and the number of codewords corresponding to R-PDCCH is 1 in an arbitrary CC, explicit indicator control section 402 transmits two response resource explicit indicators corresponding to R-PDCCH in the arbitrary CC to terminal 300 irrespective of the scheduling type. Of these two response resource explicit indicators, one is normally transmitted (that is, ARI) and the other is additionally transmitted because base station 400 and terminal 300 use a bit mapping table corresponding to the number of table bits used which is greater than the number of table bits specified from the transmission scheme actually used.

Response method specification section 403 has the same function as response method specification section 302. That is, response method specification section 403 specifies a response resource candidate based on the response resource explicit indicator received from explicit indicator control section 402 and the response resource implicit indicator received from control signal allocation section 107.

Signal processing section 404 has the same function as signal processing section 111. Signal processing section 404 further extracts signal components corresponding to respective response resource candidates specified by response method specification section 403 from the received signal and outputs the signal components to retransmission control section 405.

Retransmission control section 405 detects a response resource to which a response signal is actually mapped and the phase of the response signal based on the signal component received from signal processing section 404 and specifies a detection result pattern in terminal 300 based on the detected response resource and the phase of the response signal, and the bit mapping table corresponding to the number of table bits used specified by response method specification section 403. Retransmission control section 405 then performs retransmission control on the codeword corresponding to the component which is NACK or DTX in the specified detection result pattern.

### [Comparable techniques]

As an ACK/NACK feedback method, LTE adopts A/N mapping during 1 CW processing (PUCCH (Physical Uplink Control CHannel) format 1a: BPSK) and A/N mapping during 2 CW processing (PUCCH format 1b: QPSK). The number of TBs matches the number of CWs in LTE-Advanced. As described above, carrier aggregation is under study in LTE-A. When carrier aggregation is adopted, the number of bits necessary for a response signal increases. Thus, format 1b using channel selection which can be expanded up to 4 bits and format 3 capable of supporting even 5 bits or more are under study. In both cases, the base station and the terminal need to share information relating to which pair of CC and CW is used for transmitting DL data corresponding to the component of the detection result pattern. In order to share this information, a method of determining the number of table bits used according to a TM set for a CC is proposed.

However, when a TM assigned to a CC changes, the TM alone cannot determine the number of table bits used. For example, when carrier aggregation using two CCs is adopted and channel selection format 1b is used as an ACK/NACK feedback method, if an attempt is made to determine the number of table bits used according to a TM set for the CCs, a bit mapping table used according to a combination of the TM set for each CC is as shown below.
(1) When a TM supporting I CW is set for CC1 and a TM supporting 1 CW is set for CC2, a bit mapping table whose number of table bits is 2 is used.
(2) When a TM supporting 1 CW is set for CC1 and a TM supporting 2 CWs is set for CC2, a bit mapping table whose number of table bits is 3 is used.
(3) When a TM supporting 2 CWs is set for CC1 and a TM supporting 1 CW is set for CC2, a bit mapping table whose number of table bits is 3 is used.
(4) When a TM supporting 2 CWs is set for CC1 and a TM supporting 2 CWs is set for CC2, a bit mapping table whose number of table bits is 4 is used.

That is, in the cases of (2) and (3) above, the bit mapping table whose number of table bits is 3 as shown in FIG. 12 is used. On the other hand, in the case of (4) above, the bit mapping table whose number of table bits is 4 as shown in FIG. 13 is used.

When a TM supporting 1 CW is set in PDCCH of CC1, a TM supporting 2 CWs is set in R-PDCCH of CC1, and a TM supporting 2 CWs is set for CC2, if the terminal receives a control signal in PDCCH of CC1, a bit mapping table whose number of table bits is 3 is used, whereas if the terminal receives a control signal in R-PDCCH of CC1, a bit mapping table whose number of table bits is 4 is used

When the terminal has successfully detected the control signal correctly, no mismatch occurs in the bit mapping table used between the base station and the terminal.

However, when the terminal has not successfully detected the control signal correctly, there is a mismatch in the bit mapping table used between the base station and the terminal. When the bit mapping table differs, the detection result pattern referred to by the pair of the resource in which a response signal is arranged and the phase of the response signal differs. Therefore, when a mismatch occurs in the bit mapping table used between the base station and the terminal, a mismatch occurs in recognition relating to the detection result pattern between the base station and the terminal. As a result, the system throughput deteriorates.

In contrast, the present embodiment determines the number of table bits used based on the maximum value of the number of codewords in each CC, and can thereby prevent mismatch in the used bit mapping table between the base station and the terminal and prevent the system throughput from deteriorating.

When format 3 is used and when a response signal is transmitted after being multiplexed with PUSCH, the number of table bits used may be determined based on the maximum value of the number of codewords in each CC.

Furthermore, even when carrier aggregation using a plurality of CCs is adopted, if DL data is actually transmitted from some of the plurality of CCs in one subframe, a detection result pattern candidate in consideration of all CCs need not be used, but a detection result pattern candidate in consideration of only CCs actually used to transmit DL data may be used. That is, even when carrier aggregation using two CCs is adopted, if a rule is adopted whereby DL data is not transmitted with CC2 in a subframe in which DL data is transmitted with CC1, a response resource can be shared between CC1 and CC2. In this case, like the present embodiment, the number of table bits used may be determined based on the maximum value of the number of codewords in CC1 and CC2.

As described above, according to the present embodiment, in terminal 300, response method specification section 302 specifies a maximum value of the number of TBs in each of the first CC and the second CC based on the transmission mode and the correspondence rule set for the first resource region and the second resource region in the first CC and the second CC respectively, and specifies a bitmap used based on the maximum value of the specified number of TBs for each of the first CC and the second CC.

In this way, it is possible to prevent a system throughput caused by a mismatch regarding the bit mapping table used between the base station and the terminal.

Furthermore, when a transmission mode having the number of TBs corresponding to the first resource region equal to 2 and the number of TBs corresponding to the second resource region equal to 1 is set for a target CC out of the first CC and the second CC, response method specification section 302 specifies, as response resource candidates, resources reported from base station 400 for the first resource region of the target CC in addition to resources associated with the second resource region in a one-to-one correspondence.

Furthermore, in base station 400, when a transmission mode having the number of TBs corresponding to the first resource region equal to 1 and the number of TBs corresponding to the second resource region equal to 2 is set for a target CC out of the first CC and the second CC, explicit indicator control section 402 explicitly reports two response resources corresponding to the first resource region of the target CC.

### [Other embodiments]

(1) In Embodiment 4, when carrier aggregation using two CCs is adopted, the number of response resource explicit indicators associated with a combination in which the number of codewords corresponding to PDCCH is 2 and the number of codewords corresponding to R-PDCCH is 1 is assumed to be 2. This is because since the number of table bits used is determined based on the maximum value of the number of codewords in each CC, the same number of resources as the maximum value of the number of codewords in each CC needs to be secured (newly provided or other resources need to be used). That is, as described above, base station 400 needs to transmit a response resource explicit indicator which is additionally transmitted in addition to the response resource explicit indicator which is normally transmitted. Therefore, base station 400 needs to secure a response resource corresponding to the response resource explicit indicator to be additionally transmitted for terminal 300.

However, the use of a bit mapping table group having a special configuration eliminates the necessity for additionally securing a response resource. Thus, base station 400 can allocate the response resource to another terminal, and can thereby achieve efficient utilization of a control channel.

A bit mapping table having a special configuration has the following feature. That is, this is a feature that a detection result pattern candidate whose component corresponding to a second codeword in an arbitrary CC is DTX is not included in one response resource.

When a second codeword in an arbitrary CC is not used, the component of the detection result pattern corresponding to this second codeword is handled as DTX. Therefore, in this case, a response resource that includes no detection result pattern candidate whose component corresponding to the second codeword is DTX will not be used at all. This eliminates the necessity for additionally securing a response resource.

(2) In Embodiment 4, even in the case of a combination of the number of codewords corresponding to PDCCH and the number of codewords corresponding to R-PDCCH in which the number of response resource implicit indicators in FIGS. 14 to 16 is 2, a resource corresponding to one of two response resource implicit indicators and a resource corresponding to a response resource explicit indicator may be used as response resource candidates. Thus, when PDCCH of aggregation level 1 is used, the amount of PDCCH resources secured for one terminal 300 can be reduced. Therefore, since PDCCH corresponding to the second response resource implicit indicator can be allocated to the other terminal, the number of terminals for which control signals are mapped to PDCCH can be increased. That is, efficient utilization of PDCCH is achieved.

(3) The component carrier in each of the above embodiments may be defined by a physical cell number and a carrier frequency number, and may be also called "cell."

(4) R-PDCCH in each of the above embodiments may also be called "enhanced PDCCH."

(5) Each of the above embodiments is based on the premise that the number of CWs is identical to the number of TBs. However, the present invention is not limited to this, and the number of CWs may be different from the number of TBs. In this case, in processing where the number of CWs is used as a parameter, the number of TBs may be used instead of the number of CWs.

(6) Each of the above embodiments has been described assuming that an upper limit of the number of CWs per CC is 2, but the present invention is not limited to this, and the upper limit may be 3 or more.

(7) Although an antenna has been described in each of the above embodiments, the present invention may be likewise applied to an antenna port.

The antenna port refers to a logical antenna including a single or a plurality of physical antenna(s). That is, the antenna port is not limited to a single physical antenna, but may refer to an array antenna including a plurality of antennas.

For example, in 3 GPP LTE, how many physical antennas are included in the antenna port is not defined, but the definition is provided as the minimum unit allowing the base station to transmit different reference signals.

In addition, the antenna port may be defined as a minimum unit for multiplying a weight of the pre-coding vector.

(8) In the foregoing embodiments, the present invention is configured with hardware by way of example, but the invention may also be provided by software in cooperation with hardware.

(9) The functional blocks described in the embodiments are achieved by an LSI, which is typically an integrated circuit. The functional blocks may be provided as individual chips, or part or all of the functional blocks may be provided as a single chip. Depending on the level of integration, the LSI may be referred to as an IC, a system LSI, a super LSI, or an ultra LSI.

In addition, the circuit integration is not limited to LSI and may be achieved by dedicated circuitry or a general-purpose processor other than an LSI. A field programmable gate array (FPGA), which is programmable after fabrication of LSI, or a reconfigurable processor which allows reconfiguration of connections and settings of circuit cells in LSI may be used.

Should a circuit integration technology replacing LSI appear as a result of advancements in semiconductor technology or other technologies derived from the technology, the functional blocks could be integrated using such a technology. Another possibility is the application of biotechnology and/or the like.

The disclosure of Japanese Patent Application No.2011-027434, filed on February 10, 2011, including the specification, drawings and abstract, is incorporated herein by reference in its entirety.

### Industrial Applicability

The transmitting apparatus, receiving apparatus, transmission method, and reception method of the present invention are useful as ones that can flexibly set transmission modes even when both a first resource region usable for both a control channel and a data channel and a second resource region usable for a control channel are included as candidates for resource regions used to transmit control signals to one terminal.

### Reference Signs List

- 100, 400: Base station
- 101, 401: Transmission mode setting section
- 102: Transmission scheme determining section
- 103, 208: Transmitting section
- 104, 209: Error correcting coding section
- 105, 210: Signal generation section
- 106, 211, 304: Signal allocation section
- 107: Control signal allocation section
- 108, 212: Radio transmitting section
- 109, 201: Receiving section
- 110, 202: Radio receiving section
- 111, 204, 404: Signal processing section
- 112, 205: Error correcting decoding section
- 200, 300: Terminal
- 203: Signal demultiplexing section
- 206, 301: Control signal detection section
- 207: Transmission scheme specification section
- 302, 403: Response method specification section
- 303: Response control section
- 402: Explicit indicator control section
- 405: Retransmission control section

## Claims

1. A transmitting apparatus comprising:
a transmission mode setting section that sets one transmission mode among a plurality of transmission modes in which a plurality of control signal formats are associated with a plurality of transmission schemes used for data signals, for each of a first resource region usable for both a control channel and a data channel, and a second resource region usable for a control channel; and
a transmitting section that maps control signals for one receiving apparatus to the first resource region or the second resource region, transmits the mapped signals to the receiving apparatus and transmits information relating to the transmission mode set for each of the first resource region and the second resource region to the receiving apparatus.

2. The transmitting apparatus according to claim 1, wherein:
the transmitting apparatus transmits the control signals in CC units using a first component carrier (CCs) and a second CC, and transmits the data signals in transport block (TB) units,
the transmitting apparatus further comprises a reporting section that reports an indicator of a response resource used to transmit a response signal for the data signals, to the receiving apparatus, and
the reporting section reports, when the transmission mode in which the number of TBs corresponding to the first resource region is 1 and the number of TBs corresponding to the second resource region is 2 is set by the transmission mode setting section for a target CC out of the first CC and the second CC, indicators of the two response resources corresponding to the first resource region of the target CC.

3. The transmitting apparatus according to claim 1, wherein information relating to the transmission mode set for the first resource region and information relating to the transmission mode set for the second resource region are transmitted through different kinds of signaling.

4. The transmitting apparatus according to claim 1, wherein information relating to the transmission mode set for the first resource region and information relating to the transmission mode set for the second resource region are transmitted through one kind of signaling.

5. A receiving apparatus comprising:
a receiving section that receives control signals addressed to the receiving apparatus transmitted from a transmitting apparatus in a first resource region usable for both a control channel and a data channel or in a second resource region usable for a control channel and receives information relating to a transmission mode set by the transmitting apparatus for each of the first resource region and the second resource region;
a control signal detection section that searches the control signals in the first resource region and the second resource region and detects a detection region in which the control signals are detected out of the first resource region and the second resource region and a control signal format applied to the detected control signals; and
a transmission scheme specification section that specifies a transmission scheme used for data signals transmitted from the transmitting apparatus based on a correspondence rule that associates a plurality of transmission mode candidates with a plurality of control signal formats corresponding to the respective transmission mode candidates and transmission schemes corresponding to the respective control signal formats, a transmission mode set by the transmitting apparatus for each of the first resource region and the second resource region, and the detection region and the control signal format detected by the control signal detection section.

6. The receiving apparatus according to claim 5, wherein:
the receiving section receives the control signals in a first component carrier (CC) and a second CC, and receives the data signals in transport block (TB) units, and
the detection section searches a control signal corresponding to the data signal in the first CC and a control signal corresponding to the data signal in the second CC,
the receiving apparatus comprises:
an error correcting decoding section that performs error detection on the data signal;
a response control section that generates a response signal based on an error detection result detected by the error correcting decoding section, a search result by the control signal detection section, the transmission scheme specified by the transmission scheme specification section and the number of bits used, and generates information indicating a response resource to which the response signal is mapped; and
a response method specification section that specifies the number of TBs in each of the first CC and the second CC based on the transmission mode set in each of the first resource region and the second resource region of the first CC and the second CC and the correspondence rule, and specifies the number of bits used from a bit mapping rule based on the number of TBs specified for each of the first CC and the second CC.

7. The receiving apparatus according to claim 6, wherein when the transmission mode in which the number of TBs corresponding to the first resource region is 2 and the number of TBs corresponding to the second resource region is 1 is set for a target CC out of the first CC and the second CC, the response method specification section specifies a resource reported from the transmitting apparatus for the first resource region of the target CC, as a candidate for the response resource in addition to a resource associated with the second resource region in a one-to-one correspondence.

8. The receiving apparatus according to claim 6, wherein the bit mapping rule associates a detection result pattern candidate group made up of the error detection result detected by the error detection section and a result candidate of the search result by the control signal detection section such that in a target CC out of the first CC and the second CC, one response resource candidate does not include a plurality of detection result pattern candidates involving a component that is DTX, the component corresponding to a TB used only when the transmission mode supporting two TBs is set.

9. A transmission method comprising:
setting one transmission mode among a plurality of transmission modes in which a plurality of control signal formats are associated with a plurality of transmission schemes used for data signals, for each of a first resource region usable for both a control channel and a data channel, and a second resource region usable for a control channel; and
mapping control signals for one receiving apparatus to the first resource region or the second resource region, transmitting the mapped signals to the receiving apparatus and transmitting information relating to the transmission mode set for each of the first resource region and the second resource region to the receiving apparatus.

10. A reception method comprising:
receiving control signals addressed to a receiving apparatus transmitted from a transmitting apparatus in a first resource region usable for both a control channel and a data channel or in a second resource region usable for a control channel, receiving information relating to a transmission mode set by the transmitting apparatus for each of the first resource region and the second resource region; and
searching the control signals in the first resource region and the second resource region, detecting a detection region in which the control signals are detected out of the first resource region and the second resource region and a control signal format applied two the detected control signals, and
specifying a transmission scheme used for data signals transmitted from the transmitting apparatus based on a correspondence rule that associates a plurality of transmission mode candidates with a plurality of control signal formats corresponding to the respective transmission mode candidates and transmission schemes corresponding to the respective control signal formats, a transmission mode set by the transmitting apparatus for each of the first resource region and the second resource region, the detected detection region and the detected control signal format.
